(19) Europäisches Patentamt
European Patent Office
Office européen des brevets

(11) Veröffentlichungsnummer: **0 015 880**
**B1**

(12) # EUROPÄISCHE PATENTSCHRIFT

(45) Veröffentlichungstag der Patentschrift: **25.05.83**

(51) Int. Cl.³: **G 03 C 5/54** // C08F289/00

(21) Anmeldenummer: **80810077.0**

(22) Anmeldetag: **03.03.80**

(54) **Empfangselemente mit Gelatinepfropfpolymeren als Farbstoffbeizmittel und diese Empfangselemente enthaltendes photographisches Material.**

(30) Priorität: **09.03.79 GB 7908311**

(43) Veröffentlichungstag der Anmeldung: **17.09.80 Patentblatt 80/19**

(45) Bekanntmachung des Hinweises auf die Patenterteilung: **25.05.83 Patentblatt 83/21**

(84) Benannte Vertragsstaaten: **BE CH DE FR GB IT**

(56) Entgegenhaltungen:
**DE-A-2 905 652**
**FR-A-2 367 099**
**GB-A-1 412 131**
**GB-A-1 466 600**

(73) Patentinhaber: **CIBA-GEIGY AG, Patentabteilung Postfach, CH-4002 Basel (CH)**

(72) Erfinder: **Wright, Peter John, 61 Wanstead Pard Road, Ilford Essex (GB)**

**EP 0 015 880 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Empfangselemente mit Gelatinepfropfpolymeren als Farbstoffbeizmittel und diese Empfangselemente enthaltendes photographisches Material

Die vorliegende Erfindung betrifft Empfangselemente für übertragene Farbstoffe, insbesondere kationische Farbstoffe.

Empfangselemente für übertragene Farbstoffe werden in der Photographie bei Farbstoffübertragungsverfahren durch Diffusion verwendet, wobei Farbstoffe in einer Schicht des photographischen Materials erzeugt werden und in eine Schicht eines Farbstoffempfangselements diffundieren, wo sie gebeizt werden. Bei einem solchen Verfahren wird der Farbstoff in einer Schicht des photographischen Materials bildweise erzeugt und diffundiert bildweise in das Empfangselement. Dort wird er unter Bildung eines Farbstoffbilds gebeizt. Bei einem solchen Verfahren kann das Empfangselement zunächst mit dem Rest des photographischen Materials verbunden und, nachdem das Farbstoffbild darin entstanden ist, davon trennbar sein. Ist das Empfangselement jedoch nicht mit dem Rest des photographischen Materials verbunden, so wird es bei der Verwendung mit diesem in flächenhafter Berührung gehalten, so daß der diffundierende Farbstoff aus dem photographischen Material in das Empfangselement diffundieren kann. Anschließend wird das Empfangselement vom photographischen Material getrennt.

Empfangselemente werden auch bei gewissen Farbstoffeinsaugeverfahren verwendet, bei denen ein Farbstoff bildweise, zum Beispiel über eine Bildschablone oder von einer Gelatinebildmatrix, auf ein Empfangselement übertragen wird. Solche Einsaugeverfahren lassen sich bei der Herstellung von Farbpositivfilmkopien anwenden.

Empfangselemente für Übertragungsverfahren durch Diffusion und auch Einsaugeverfahren enthalten üblicherweise einen Träger, auf den ein Farbstoffbeizmittel in einem Bindemittel gegossen ist. Die meisten bisher verwendeten Beizmittel sind in Wasser oder organischen Lösungsmitteln lösliche polymere Substanzen, die üblicherweise mit dem Bindemittel als Lösung gegossen werden.

Die Bildung eines stabilen Farbstoff/Beizmittelkomplexes bei solchen Polymeren beruht auf elektrostatischer und hydrophober Bindung. Es handelt sich dabei üblicherweise um ionisch geladene Polymere komplizierter Struktur, die als Lösungspolymere hergestellt werden. Da das Polymer nicht in der Farbstoffempfangsschicht des Empfangselements diffundieren darf, müssen Lösungspolymere von genügend hohem Molekulargewicht hergestellt werden. Dabei sind jedoch Schwierigkeiten aufgetreten. Wird die Polymerisation bei Temperaturen über 80° C durchgeführt, um Material höheren Molekulargewichts zu erhalten, so vernetzt das Polymer in vielen Fällen und kann deshalb keine zum Gießen auf den Träger des Empfangselements geeignete echte Lösung bilden. Als Lösungspolymere zum Beizen kationischer Farbstoffe wären solche geeignet, die eine Sulfonat- oder Sulfatgruppe enthalten. Derartige Lösungspolymere werden jedoch zur Viskositätserhöhung in Gießmassen verwendet, z. B. Natriumcellulosesulfat sowie Polymere wie in U. S. Patentschrift 3 022 172 beschrieben. Wäßrige Lösungen solcher Lösungspolymerer besitzen somit eine so hohe Viskosität, daß sie zur Herstellung von Beizschichten nicht verwendbar sind.

Es wurde nun ein zum Beizen von darauf übertragenen Farbstoffen verwendbares Empfangselement gefunden, welches keinen Gebrauch von Lösungspolymeren als Beizmittel macht.

Gegenstand vorliegender Erfindung ist demnach ein Empfangselement für übertragene Farbstoffe, welches aus einem Träger mit einer darauf gegossenen Beizmittelschicht besteht, welche ein Pfropfpolymer enthält, das aus mindestens den drei Komponenten

a) einem wasserlöslichen proteinartigen Polymer,
b) einem bei der Homopolymerisation ein wasserunlösliches Polymer liefernden Monomer und
c) einem eine Sulfonatgruppe enthaltenden und bei der Homopolymerisation ein wasserlösliches Polymer liefernden Monomer, hergestellt ist.

Es versteht sich, daß weitere Komponenten vorliegen können, beispielsweise Monomere, die bei der Homopolymerisation ein wasserlösliches Polymer liefern, aber keine Sulfonatgruppe enthalten. Anschließend bieten solche Komponenten jedoch keine Vorteile im Pfropfpolymer. Ferner kann man zwei oder mehrere Monomere zum Aufbau der Komponente b) bzw. c) einsetzen. Vorzugsweise verwendet man jedoch nur ein proteinartiges Polymer als Komponente a).

Vorzugsweise beträgt das Gewichtsverhältnis der Komponente a) zur Komponente b) im Pfropfpolymer 1a) : 0,5b) bis 1a) : 1,5b). Das Gewichtsverhältnis der Komponente b) zur Komponente c) im Pfropfpolymer liegt vorzugsweise bei 1b) : 0,05c) bis 1b) : 0,5c).

Das bevorzugte wasserlösliche proteinartige Polymer a) ist Gelatine, jedoch sind andere proteinartige Polymere, zum Beispiel Casein, Albumin und Kollagen, verwendbar.

Als bei der Homopolymerisation ein wasserunlösliches Polymer liefernde Monomere b) werden Acryl- und Vinylmonomere bevorzugt.

Besonders geeignete Monomere sind Acrylmonomere der allgemeinen Formel

(1) 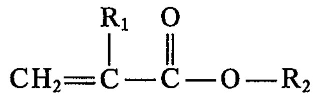

sowie Vinylmonomere der allgemeinen Formel

(2) 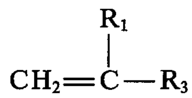

worin $R_1$ Wasserstoff, Halogen oder Methyl, $R_2$ Alkyl oder Aryl und $R_3$ Aryl, Acyloxy oder Cyan ist.

Besonders bevorzugt werden die Monomeren, worin $R_2$ Alkyl mit 1 bis 5 Kohlenstoffatomen oder Phenyl und $R_3$ Phenyl, Acyloxy mit 1 bis 4 Kohlenstoffatomen oder Cyan ist und $R_1$ die oben angegebene Bedeutung hat.

Beispiele für besonders geeignete Monomere der Formeln (1) und (2) sind Styrol, Acrylnitril, Vinylacetat, Methylmethacrylat und Äthylacrylat.

Als eine Sulfonatgruppe enthaltende Monomere c) werden Acrylmonomere wegen ihrer leichten Copolymerisierbarkeit bevorzugt.

Besonders geeignete Monomere sind Acrylate bzw. Methacrylate der allgemeinen Formel

(3) 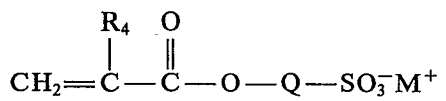

worin $R_4$ Wasserstoff oder Methyl, Q ein zweiwertiger organischer Rest und $M^+$ ein Alkali- oder Ammoniumkation ist.

Der zweiwertige organische Rest Q ist vorzugsweise eine Alkylgruppe mit 2 bis 6 Kohlenstoffatomen, die gegebenenfalls durch weitere zweiwertige Gruppen wie $-O-$, $-S-$ oder $-NH-$ unterbrochen ist.

Weitere geeignete Monomere sind Acrylamide und Methacrylamide der allgemeinen Formel

(4) 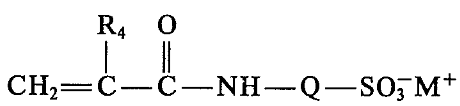

worin $R_4$, Q und $M^+$ die oben angegebenen Bedeutungen haben.

Bevorzugte zweiwertige organische Reste sind Alkylengruppen und unterbrochene Alkylengruppen, beispielsweise:

$-CH_2-O-CH_2$ und $-CH_2-NH-CH_2-$.

Das Pfropfpolymer läßt sich unter Anwendung üblicher Initiatoren herstellen. Solche Initiatoren sind unter anderem 2,2'-Azobis-(2-methylpropionitril), 4,4'-Azobis-(4-cyanvaleriansäure), Kaliumpersulfat und Ammoniumpersulfat.

Zur Entfernung nicht umgesetzter Monomere wird das Pfropfpolymer vorzugsweise durch Ultrafiltration oder Dialyse gereinigt.

Die erfindungsgemäßen Empfangselemente lassen sich bei jedem Übertragungsverfahren für kationische Farbstoffe anwenden, sogar die vollständige Einfärbung der Empfangsschicht ist möglich.

Zu den kationischen Farbstoffen, welche dazu dienen können, das Beizvermögen der erfindungsgemäßen Empfangselemente zu veranschaulichen, zählen Phenosafranin der Formel

(5) 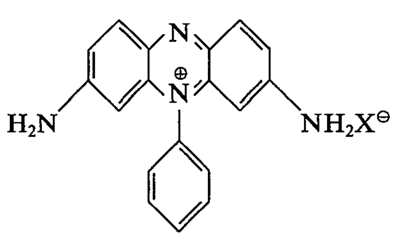

und weitere wohlbekannte kationische Farbstoffe der Formeln

(6) 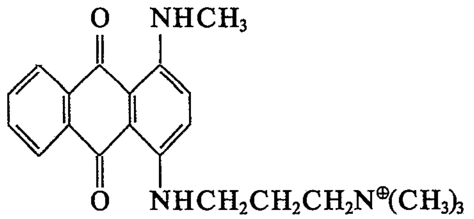 $SO_4CH_3^{\ominus}$

(7) 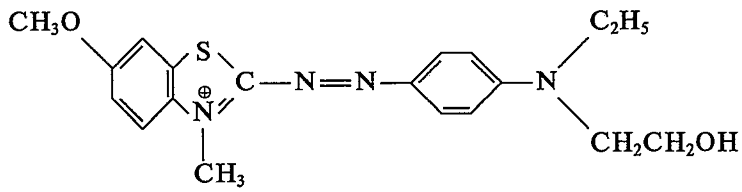 $SO_4CH_3^{\ominus}$

(8) 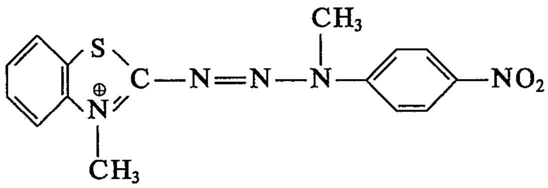 $NaCl_2^{\ominus}$

(9) 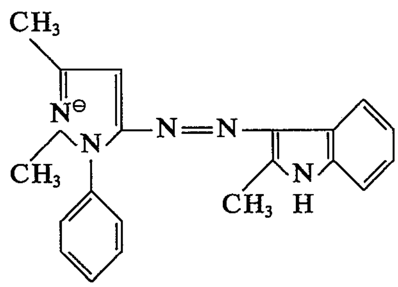 $CH_3SO_4^{\ominus}$

(10) 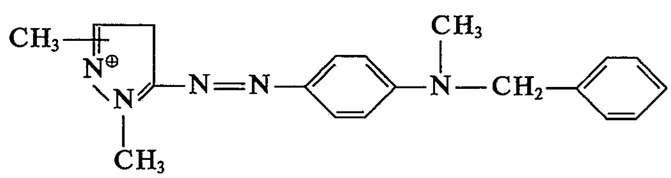 $CH_3SO_4^{\ominus}$

Zur Herstellung der erfindungsgemäßen Empfangselemente unter Verwendung der Pfropfpolymeren verdünnt man die ultrafiltrierten Lösungen auf eine etwa 3gew.-%ige wäßrige Lösung des proteinartigen Polymers. Solche Lösungen besitzen eine Viskosität von weniger als 0,02 Pa · s und lassen sich somit leicht auf einen Träger gießen. Vorzugsweise wird ein nicht-ionogenes Netzmittel als Gießhilfsmittel und ferner ein Härter für das proteinartige Polymer zugesetzt. Geeignete Mengen nicht-ionogenen Netzmittels liegen bei 0,01 bis 2 Gew.-% bezogen auf die Pfropfterpolymergießlösung. Die zweckmäßigen Härtermengen belaufen sich auf 0,1 bis 5 Gew.-% der vorhandenen Gelatine.

Als nicht-ionogene Netzmittel eignen sich beispielsweise Saponin, Polyäthylenglykol, ein Polyäthylenglykol/Polypropylenglykolkondensat sowie Polyalkylenglykolester.

Geeignete Härter für das proteinartige Polymer sind beispielsweise Formaldehyd, Glutaraldehyd, Glyoxal sowie Cyanurchloridderivate wie das Natriumsalz des 2,4-Dichlor-6-hydroxytriazins.

Der Träger für das Empfangselement kann eine Filmunterlage mit darauf gegossener, das Pfropfpolymer enthaltenden Empfangsschicht oder auch eine Papierunterlage mit darauf gegossener Empfangsschicht sein.

Jedoch ist jede andere, üblicherweise als photographischer Träger eingesetzte Unterlage verwendbar, zum Beispiel Glas. Soll das Empfangselement bei einem Einsaugeverfahren zur Erzielung einer künstlerischen Wirkung verwendet werden, so läßt sich irgendeine Art starrer Unterlage wie eine Metallplatte oder sogar Holz einsetzen. Es versteht sich, daß dabei eine oder mehrere Schichten zwischen der Empfangsschicht und der Unterlage, auf die sie gegossen ist, vorliegen können. Dabei kann es sich beispielsweise um Substrierschichten, Neutralisierschichten oder Zeitkontrollschichten handeln.

Ein zweckmäßiges Gießgewicht des als Beizschicht wirkenden Pfropfpolymers auf dem Träger

beträgt 40 bis 200 mg/$dm^2$. Die beim erfindungsgemäßen Empfangselement als Beizschicht verwendete Pfropfpolymerschicht ist in der Lage, kationische diffusionsfähige Farbstoffe substantiv zu beizen. Das Pfropfpolymer läßt sich leicht gießen und zu einer glatten sauberen farblosen Schicht trocknen.

Die Gegenwart der Komponente b) trägt dazu bei, die guten Gießeigenschaften des Polymeren sowie auch auf eine nicht ganz erklärbare Weise die Aufnahme des Farbstoffs zu fördern.

Das erfindungsgemäße Empfangselement ist bei einem photographischen Farbübertragungsverfahren durch Diffusion anwendbar. Dabei kann das Empfangselement einen integrierenden Teil eines photographischen Materials darstellen, das mindestens eine lichtempfindliche Schicht enthält. Üblicherweise wird das photographische Material belichtet, gegebenenfalls durch die Unterlage des Empfangselements hindurch, wenn diese transparent ist. Danach wird die Entwicklerlösung in das photographische Material eingebracht; diese entwickelt das photoempfindliche Material und bewirkt gleichzeitig eine bildweise Übertragung mindestens eines im photographischen Material freigesetzten diffusionsfähigen Farbstoffs. Dieser wandert zum Empfangselement, wo er in der Empfangsschicht durch das geladene Oligomer gebeizt wird. Bei einigen Verfahren, wo ein solches photographisches Material verwendet wird, bleibt die Empfangsschicht mit dem Rest des photographischen Materials verbunden. Bei anderen Verfahren wird nach dem Beizen des Farbstoffs in der Empfangsschicht das Empfangselement vom Rest des photographischen Elements abgezogen. Bei weiteren Verfahren ist die Empfangsschicht nicht mit dem Rest des photographischen Materials verbunden, doch kann sie beispielsweise entlang einer Kante daran angefügt sein. Nach der bildweisen Belichtung des photographischen Materials wird das Empfangselement in flächenhafte Berührung mit dem Rest des photographischen Materials gebracht. Man läßt Entwicklerlösung eindringen, und es findet eine Übertragung mindestens eines Farbstoffs aus dem photoempfindlichen Teil des photographischen Materials in das Empfangselement statt. Nach beendeter Übertragung des Farbstoffs kann man das Empfangselement vom Rest des photographischen Materials entfernen.

Gegenstand der Erfindung sind somit weiterhin lichtempfindliche photographische Materialien, welche ein wie oben definiertes Empfangselement enthalten.

Das erfindungsgemäße Empfangselement ist auch bei einem Einsaugeübertragungsverfahren anwendbar, wo beispielsweise ein Reliefgelatinebild auf einer Matrix gebildet wird. Dieses Reliefbild wird mit einem kationischen Farbstoff angefärbt und die Matrix dann an das Empfangselement angedrückt, so daß sich die gefärbte Gelatine in flächenhafter Berührung mit der Empfangsschicht befindet. Der Farbstoff wird dabei auf die Empfangsschicht übertragen und dort gebeizt.

Verschiedene weitere Einsaugeverfahren, bei denen das erfindungsgemäße Empfangselement verwendbar ist, sind bekannt, einschließlich eines Verfahrens, bei dem der Farbstoff durch eine Schablone oder ein Siebdruckbild hindurch auf die Empfangsschicht übertragen wird.

Nachfolgend wird die Herstellung von erfindungsgemäß verwendbaren Pfropfpolymeren beschrieben. Teile und Prozente beziehen sich auf das Gewicht sofern nicht anders angegeben.

### Herstellungsvorschrift 1

Pfropfpolymer aus Gelatine, Acrylnitril und Natrium-2-acrylamido-2-methylpropansulfonat.

In einem mit zwei Tropftrichtern, Stickstoffeinlaß und -auslaß, Rückflußkühler und mechanischem Rührer ausgerüsteten Kolben werden 500 ml 3gew.-%ige wäßrige Gelatinelösung vorgelegt. Durch die Lösung leitet man 30 Minuten lang Stickstoff, während die Temperatur auf 80° C gesteigert wird. Man versetzt mit 1,0 g 4,4'-Azobis-(4-cyanvaleriansäure) und nach weiteren zwei Minuten mit 15 g durch Destillation von Inhibitor befreitem Acrylnitril sowie im Verlauf von 15 Minuten mit 9 g 2-Acrylamido-2-methylpropansulfonsäure-natriumsalz in 15 ml Wasser. Man läßt die Polymerisation weitere 90 Minuten bei 80° C ablaufen. Anschließend wird die Lösung filtriert.

Die Bestimmung des Feststoffgehalts zeigt, daß 81% des Acrylnitrils in Polymer umgewandelt sind.

### Herstellungsvorschrift 2

Pfropfcopolymer aus Gelatine, Acrylnitril und Natrium-2-acrylamido-2-methylpropansulfonat.

Die Herstellung erfolgt wie in 1, jedoch unter Einsatz von 4,5 g 2-Acrylamido-2-methylpropansulfonsäure-natriumsalz.

Die Bestimmung des Feststoffgehalts zeigt, daß 70% des Acrylnitrils in Pfropfpolymer umgewandelt sind.

### Herstellungsvorschrift 3

Pfropfpolymer aus Gelatine, Styrol und Natrium-2-acrylamido-2-methyl-propansulfonat.

Die Herstellung erfolgt wie in 1, jedoch unter Einsatz von 15 g Styrol anstelle des Acrylnitrils sowie

2,25 g des Natriumsalzes der 2-Acrylamido-2-methylpropansulfonsäure.

Die Bestimmung des Feststoffgehalts zeigt, daß 92% des Styrols in Pfropfpolymer umgewandelt sind.

Herstellungsvorschrift 4

Pfropfpolymer aus Gelatine, Acrylnitril und Natrium-2-Acrylamido-2-methylpropansulfonat.

In einem mit mechanischem Rührer, Thermometer, Rückflußkühler und Stickstoffeinlaß und -auslaß ausgerüsteten Kolben werden 500 ml 3gew.-%ige Gelatinelösung in destilliertem Wasser vorgelegt. Der Kolben mit Inhalt wird unter Stickstoff im Wasserbad auf 40°C erhitzt. Dann versetzt man mit Acrylnitril (15 g) und 2-Acrylamido-2-methyl-propansulfonsäure (4,5 g) und stellt den pH-Wert des Gemischs durch Zugabe 10%iger wäßriger Natronlauge auf 3,0. Danach leitet man 30 Minuten lang Stickstoff hindurch. Ein aus 0,12 g Natriummetabisulfit und 0,2 g Kaliumpersulfat bestehender Redoxkatalysator wird dann zugegeben. Innerhalb 10 Minuten steigt die Temperatur auf 50°C. Man läßt die Polymerisation 2 Stunden bei 40°C weiterlaufen. 83% der Monomeren sind in Polymer umgewandelt.

Herstellungsvorschrift 5

Pfropfpolymer aus Casein, Methylmethacrylat und Natrium-2-acrylamido-2-methylpropansulfonsäure.

In einem mit Rührer, Thermometer, Rückflußkühler und Stickstoffeinlaß und -auslaß ausgerüsteten 1-Liter Kolben werden 500 ml 3%ige Caseinlösung in destilliertem Wasser vorgelegt. Unter Durchleiten von Stickstoff erhitzt man im Wasserbad auf 80°C. Man versetzt mit 1 g 4,4'-Azobis-(4-cyanvaleriansäure), und nach weiteren 15 Minuten werden Methylmethacrylat (15 g) und das in 15 ml destilliertem Wasser gelöste Natriumsalz der 2-Acrylamido-2-methylpropansulfonsäure (10,1 g) im Verlauf von 15 Minuten aus getrennten Tropftrichtern zugegeben. Man läßt die Polymerisation 2 Stunden unter Stickstoff bei 80°C weiterlaufen. Die Analyse zeigt, daß 97,4% der Monomeren in die polymere Form umgewandelt sind.

Herstellungsvorschrift 6

Pfropfpolymer aus Gelatine, Methylmethacrylat und Natrium-2-acrylamido-2-methylpropansulfonsäure.

Man verfährt wie in Herstellungsvorschrift 5, außer daß Casein durch Gelatine ersetzt wird.

Die Analyse zeigt, daß 85% der Ausgangsmonomeren in die polymere Form umgewandelt sind.

Herstellungsvorschrift 7

Pfropfpolymer aus Gelatine, Styrol und Natrium-4-acryloyloxybenzolsulfonat.

In einem mit Rührer, Thermometer, Rückflußkühler und Stickstoffeinlaß und -auslaß ausgerüsteten 1-Liter Kolben werden 500 ml 3%ige Gelatinelösung in destilliertem Wasser vorgelegt. Durch die Lösung leitet man 30 Minuten lang Stickstoff, während die Temperatur auf 80°C gesteigert wird, und versetzt dann mit 1,4 g 4,4'-Azobis-(4-cyanvaleriansäure). Dann werden im Verlauf von 15 Minuten Styrol (15 g) und in 20 ml destilliertem Wasser gelöstes Natrium-4-acryloyloxybenzolsulfonat (5,7 g) getrennt aus Tropftrichtern zugegeben. Man läßt die Polymerisation unter Stickstoff noch 12 Stunden bei 80°C weiterlaufen.

Die Analyse zeigt, daß 92% der Ausgangsmonomeren in die polymere Form umgewandelt sind.

Zur Entfernung der nicht umgesetzten Monomeren werden die wäßrigen Pfropfpolymerlösungen jeweils einer Ultrafiltration unterzogen.

Beispiel

Für dieses Beispiel werden die gemäß den obigen Herstellungsvorschriften erhaltenen Pfropfterpolymeren 1 bis 7 verwendet.

Die Empfangselemente werden dadurch hergestellt, daß man jeweils eine wäßrige Lösung des Pfropfterpolymers so bereitet, daß die Gelatinekonzentration der Lösung je etwa 3 Gew.-% beträgt. Man versetzt mit dem nicht-ionogenen Netzmittel Saponin in einer Menge von 100 ml 1%iger wäßriger Lösung pro Liter sowie mit 1 g des Natriumsalzes von 2,4-Dichlor-6-hydroxytriazin (Härter) pro Liter wäßriger Lösung.

Die Lösungen einer Viskosität von etwa 0,014 Pa · s werden dann jeweils auf klares Cellulosetriacetat gegossen und anschließend getrocknet und 5 Tage bei 40°C inkubiert, um das Pfropfpolymer zu vernetzen. Das Gießgewicht der Proben beträgt je 130 mg/dm² als Gelatine.

Die sieben Güsse werden dann jeweils 20 Sekunden lang in 0,25gew.-%ige wäßrige Lösung der Verbindung (5) eingetaucht und getrocknet. Dann mißt man das sichtbare Spektrum. Die Schichten werden danach jeweils 5 Minuten in 0,1n-Schwefelsäure getränkt. Überschüssige Säure entfernt man dann mittels saugfähigem Papier (»Löschpapier«) und trocknet die Schichten anschließend. Das sichtbare Spektrum wird erneut gemessen.

$$\text{Substantivität} = \frac{\text{dekadische Extinktion des getränkten Abschnitts bei } \lambda\,\text{max}}{\text{dekadische Extinktion der Beizschicht bei } \lambda\,\text{max}} \times 100$$

Ergebnisse

| Pfropfpolymer | Substantivität (%) |
|---|---|
| 1 | 98 |
| 2 | 85 |
| 3 | 66 |
| 4 | 90 |
| 5 | 65 |
| 6 | 63 |
| 7 | 92 |

Ein Guß mit demselben Gewicht Gelatine aber ohne Beizmittel wird ebenfalls derselben Prüfmethode unterworfen. Die Substantivität der Verbindung (5) beträgt 30%.

**Patentansprüche**

1. Empfangselement für übertragene Farbstoffe, bestehend aus einem Träger mit einer darauf gegossenen, ein Pfropfpolymer enthaltenden Beizmittelschicht, dadurch gekennzeichnet, daß man ein Pfropfpolymer aus mindestens den drei Komponenten

a) einem wasserlöslichen proteinartigen Polymer,
b) einem bei der Homopolymerisation ein wasserunlösliches Polymer liefernden Monomer und
c) einem eine Sulfonatgruppe enthaltenden und bei der Homopolymerisation ein wasserlösliches Polymer liefernden Monomer, verwendet.

2. Empfangselement nach Anspruch 1, dadurch gekennzeichnet, daß das Gewichtsverhältnis der Komponente a) zur Komponente b) 1 zu (0,5 – 1,5) beträgt.

3. Empfangselement nach Anspruch 1 oder 2, dadurch gekennzeichnet, daß das Gewichtsverhältnis der Komponente b) zur Komponente c) 1 zu (0,05 – 0,5) beträgt.

4. Empfanoselement nach einem der Ansprüche 1 bis 3, dadurch gekennzeichnet, daß das wasserlösliche proteinartige Polymer a) Gelatine ist.

5. Empfangselement nach einem der Ansprüche 1 bis 4, dadurch gekennzeichnet, daß Komponente b) ein Acrylmonomer der allgemeinen Formel

(1) 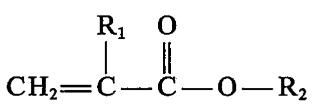

oder ein Vinylmonomer der allgemeinen Formel

(2) 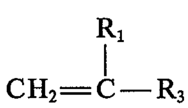

ist, worin $R_1$ Wasserstoff, Halogen oder Methyl, $R_2$ Alkyl oder Aryl und $R_3$ Aryl, Acyloxy oder Cyan ist.

6. Empfangselement nach Anspruch 5, dadurch gekennzeichnet, daß $R_2$ Alkyl mit 1 bis 5 Kohlenstoffatomen oder Phenyl und $R_3$ Phenyl, Acyloxy mit 1 bis 4 Kohlenstoffatomen oder Cyan ist

und $R_1$ die in Anspruch 5 angegebene Bedeutung hat.

7. Empfangselement nach Anspruch 5, dadurch gekennzeichnet, daß Komponente b) Styrol, Acrylnitril, Vinylacetat, Methylmethacrylat oder Äthylacrylat ist.

8. Empfangselement nach einem der Ansprüche 1 bis 7, dadurch gekennzeichnet, daß Komponente c) ein Acrylat- bzw. Methacrylatmonomer der allgemeinen Formel

(3) 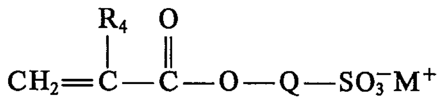

ist, worin $R_4$ Wasserstoff oder Methyl, Q ein zweiwertiger organischer Rest und $M^+$ ein Alkali- oder Ammoniumkation, ist.

9. Empfangselement nach einem der Ansprüche 1 bis 7, dadurch gekennzeichnet, daß Komponente c) ein Acrylamid- oder Methacrylamidmonomer der Formel

(4) 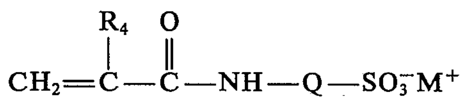

ist, worin $R_4$, Q und $M^+$ die in Anspruch 8 angegebene Bedeutung haben.

10. Empfangselement nach Anspruch 8 oder 9, dadurch gekennzeichnet, daß Q eine gegebenenfalls durch $-O-$, $-S-$ oder $-NH-$ unterbrochene Alkylengruppe mit 2 bis 6 Kohlenstoffatomen ist.

11. Empfangselement nach einem der Ansprüche 1 bis 10, dadurch gekennzeichnet, daß der Träger ein Film- oder Papierträger ist.

12. Empfangselement nach einem der Ansprüche 1 bis 11, dadurch gekennzeichnet, daß ein übertragener Farbstoff an das Polymer gebeizt ist.

13. Verfahren zur Herstellung eines Empfangselements für übertragene Farbstoffe durch Beschichten eines Trägers mit einer ein Pfropfpolymer enthaltenden Beizmittelschicht, Trocknen und Inkubieren der erhaltenen Schicht, dadurch gekennzeichnet, daß man einen Film- oder Papierträger mit einer 3gew.-%igen wäßrigen Lösung eines proteinartigen Pfropfpolymers aus mindestens den 3 Komponenten

a) einem wasserlöslichen proteinartigen Polymer,
b) einem bei der Homopolymerisation ein wasserunlösliches Polymer liefernden Monomer und
c) einem eine Sulfonatgruppe enthaltenden und bei der Homopolymerisation ein wasserlösliches Polymer liefernden Monomer,

beschichtet.

14. Verfahren nach Anspruch 13, dadurch gekennzeichnet, daß ein nicht-ionogenes Netzmittel und ein Härter zur wäßrigen Lösung des proteinartigen Pfropfpolymers zugesetzt wird.

15. Verfahren nach Anspruch 14, dadurch gekennzeichnet, daß die Menge nicht-ionogenen Netzmittels 0,01 bis 2 Gew.-% der Gießlösung und die Menge Härter 0,1 bis 5 Gew.-% der vorhandenen Gelatine beträgt.

16. Photographisches Material, dadurch gekennzeichnet, daß es mindestens eine lichtempfindliche Schicht und, im photographischen Material integriert, ein Empfangselement nach einem der Ansprüche 1 bis 12 enthält.

## Claims

1. A receiving element for transferred dyes which comprises a support having coated thereon a mordant layer which comprises a graft polymer which is prepared from at least the three components

a) a water-soluble proteinacious polymer,
b) a monomer which when homopolymerised yields a water-insoluble polymer, and
c) a monomer which comprises a sulfonate group and which when homopolymerised yields a water-soluble polymer.

2. A receiving element according to claim 1, wherein the ratio of compound a) to component b) is from 1 to (0.5 – 1.5) by weight.

3. A receiving element according to either claim 1 or claim 2, wherein the ratio of component b) to component c) is from 1 to (0.05 – 0.5) by weight.

4. A receiving element according to any of claims 1 to 3, wherein the water-soluble proteinacious polymer a) is gelatin.

5. A receiving element according to any one of claims 1 to 4, wherein component b) is an acrylic

monomer of the general formula

(1) $$CH_2{=}\overset{R_1}{\underset{}{\overset{|}{C}}}-\overset{O}{\overset{\|}{C}}-O-R_2$$

or a vinyl monomer of the general formula

(2) $$CH_2{=}\overset{R_1}{\overset{|}{C}}-R_3$$

where $R_1$ is hydrogen, halogen or methyl and $R_2$ is alkyl or aryl and $R_3$ is aryl, acyloxy or cyano.

6. A receiving element according to claim 5, wherein $R_2$ is alkyl of 1 to 5 carbon atoms or phenyl, $R_3$ is phenyl, acyloxy of 1 to 4 carbon atoms or cyano, and $R_1$ has the meaning assigned to it in claim 5.

7. A receiving element according to claim 5, wherein component b) is styrene, acrylonitrile, vinyl acetate, methyl methacrylate or ethyl acrylate.

8. A receiving element according to any one of claims 1 to 7, wherein component c) is an acrylate or methacrylate monomer of the general formula

(3) $$CH_2{=}\overset{R_4}{\overset{|}{C}}-\overset{O}{\overset{\|}{C}}-O-Q-SO_3^-M^+$$

where $R_4$ is hydrogen or methyl, Q is a bivalent organic radical and $M^+$ is an alkali metal or ammonium cation.

9. A receiving element according to any one of claims 1 to 7, wherein component c) is an acrylamide or methacrylamide monomer of the formula

(4) $$CH_2{=}\overset{R_4}{\overset{|}{C}}-\overset{O}{\overset{\|}{C}}-NH-Q-SO_3^-M^+$$

where $R_4$, Q and $M^+$ have the meanings assigned to them in claim 8.

10. A receiving element according to either claim 8 or claim 9, wherein Q is an alkylene group of 2 to 6 carbon atoms optionally interrupted by $-O-$, $-S-$ or $-NH-$.

11. A receiving element according to any one of claims 1 to 10, wherein the base is a film base or a paper base.

12. A receiving element according to any one of claims 1 to 11, which comprises mordanted to the polymer a transferred dye.

13. A process for the preparation of a receiving element for transferred dyes by coating a support with a mordant layer which contains a graft polymer, drying and incubating the layer so obtained, which process comprises coating a film or paper base with a 3% by weight aqueous solution consisting of at least the three components

a) a water-soluble proteinacious polymer,
b) a monomer which when homopolymerised yields a water-insoluble polymer, and
c) a monomer which comprises a sulfonate group and which when homopolymerised yields a water-soluble polymer.

14. A receiving element according to claim 13, which comprises adding to the aqueous solution of the proteinacious graft polymer a non-ionic wetting agent and a hardening agent.

15. A receiving element according to claim 14, wherein the amount of non-ionic wetting agent is 0.01 to 2% by weight of the coating solution, and the amount of hardening agent is 0.1 to 5% by weight of gelatin present.

16. A photographic assembly which comprises at least one light sensitive layer and integral with the assembly a receiving element as claimed in any one of claims 1 to 12.

**Revendications**

1. Elément récepteur pour colorants transférés, constitué par un support revêtu par coulée d'une couche de mordant contenant un polymère greffé, caractérisé par le fait qu'on utilise un polymère greffé constitué à partir d'au moins lex 3 composants suivants.

a) un polymère de type protéinique soluble dans l'eau,
b) un monomère fournissant par homopolymérisation un polymère insoluble dans l'eau et
c) un monomère contenant un groupe sulfonate et fournissant par homopolymérisation un polymère soluble dans l'eau.

2. Elément récepteur selon la revendication 1, caractérisé par le fait que le rapport pondéral entre le composant a) et le composant b) est de 1 à (0,5 – 1,5).

3. Elément récepteur selon la revendication 1 ou 2, caractérisé par le fait que le rapport pondéral entre le composant b) et le composant c) est de 1 à (0,05 – 0,5).

4. Elément récepteur selon l'une quelconque des revendications 1 à 3, caractérisé par le fait que le polymère a) de type protéinique soluble dans l'eau est la gélatine.

5. Elément récepteur selon l'une quelconque des revendications 1 à 4, caractérisé par le fait que le composant b) est un monomère acrylique de formule générale

(1) 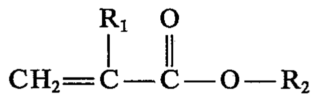

ou un monomère vinylique de formule générale.

(2) 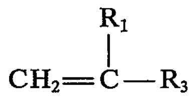

dans lesquelles $R_1$ est hydrogène, halogène ou méthyle, $R_2$ est alkyle ou aryle et $R_3$ est aryle, acyloxy ou cyano.

6. Elément récepteur selon la revendication 5, caractérisé par le fait que $R_2$ est un alkyle ayant 1 à 5 atomes de carbone ou phényle et $R_3$ est phényle, acyloxy ayant de 1 à 4 atomes de carbone ou cyano et $R_1$ est défini comme spécifié dans la revendication 5.

7. Elément récepteur selon la revendication 5, caractérisé par le fait que le composant b) est le styrène, l'acrylonitrile, l'acétate de vinyle, le méthacrylate de méthyle ou l'acrylate d'éthyle.

8. Elément récepteur selon l'une quelconque des revendications 1 à 7, caractérisé par le fait que le composant c) est un monomère de type acrylate ou méthacrylate de formule générale

(3) 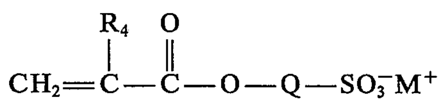

dans laquelle $R_4$ est hydrogène ou méthyle, Q est un radical organique divalent et $M^+$ est un cation alcalin ou d'ammonium.

9. Elément récepteur selon l'une quelconque des revendications 1 à 7, caractérisé par le fait que le composant c) est un monomère de type acrylamide ou méthacrylamide de formule

(4) 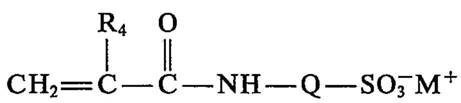

dans laquelle $R_4$, Q et $M^+$ sont définis comme spécifié dans la revendication 8.

10. Elément récepteur selon la revendication 8 ou 9, caractérisé par le fait que Q est un groupe alkylène ayant 2 à 6 atomes de carbone, éventuellement interrompus par $-O-$, $-S-$ ou $-NH-$.

11. Elément récepteur selon l'une quelconque des revendications 1 à 10, caractérisé par le fait que le support est un film ou un papier.

12. Elément récepteur selon l'une quelconque des revendications 1 à 11, caractérisé par le fait qu'un colorant transféré est mordancé sur le polymère.

13. Procédé pour la préparation d'un élément récepteur pour colorants transférés par revêtement d'un support avec une couche de mordant contenant un polymère greffé, séchage et incubation de la couche obtenue, caractérisé par le fait que l'on enduit un support en film ou papier avec une solution aqueuse à 3% en poids d'un polymère greffé de type protéinique à base au moins de 3 composants

a) un polymère de type protéinique soluble dans l'eau,
b) un monomère fournissant par homopolymérisation un polymère insoluble dans l'eau et,
c) un monomère contenant un groupe sulfonate et fournissant par homopolymérisation un polymère soluble dans l'eau.

14. Procédé selon la revendication 13, caractérisé par le fait que l'on ajoute un agent mouillant non ionique et un durcisseur, à la solution aqueuse du polymère greffé de type protéinique.

15. Procédé selon la revendication 14, caractérisé par le fait que la quantité de l'agent mouillant non ionique s'élève de 0,01 à 2% en poids de la solution de coulée et que la quantité de durcisseur est de 0,1 à 5% en poids de la gélatine présente.

16. Matériau photographique, caractérisé par le fait qu'il contient au moins une couche sensible à la lumière et, intégré au matériau photographique un élément récepteur selon l'une quelconque des revendications 1 à 12.